(19) Europäisches Patentamt
European Patent Office
Office européen des brevets

(11) EP 1 724 303 B1

(12) **EUROPEAN PATENT SPECIFICATION**

(45) Date of publication and mention of the grant of the patent:
**23.09.2009 Bulletin 2009/39**

(51) Int Cl.:
***C08L 23/10*** *(2006.01)* ***C08L 23/12*** *(2006.01)*

(21) Application number: **05010973.5**

(22) Date of filing: **20.05.2005**

(54) **Polypropylene of improved processability for production of pipes**

Polypropylen mit verbesserter Verarbeitbarkeit zur Herstellung von Rohren

Polypropylène ayant une processibilité améliorée pour la fabrication de tuyaux

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**22.11.2006 Bulletin 2006/47**

(73) Proprietor: **Borealis Technology Oy**
**06101 Porvoo (FI)**

(72) Inventors:
- **Harjuntausta, Jarmo**
  **00630 Helsinki (FI)**
- **Ek, Carl-Gustaf**
  **426 58 Västra Frölunda (SE)**
- **Alastalo, Kauno**
  **06400 Porvoo (FI)**
- **Lund, Kenneth**
  **451 51 Uddevalla (SE)**

(74) Representative: **Kador & Partner**
**Corneliusstrasse 15**
**80469 München (DE)**

(56) References cited:
**EP-A- 0 791 609**
**EP-A- 1 162 219**
**WO-A-97/13790**
**WO-A-99/35430**
**US-A1- 2004 260 001**
**US-B1- 6 503 993**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 724 303 B1

## Description

The present invention relates to a polymer composition having improved processability for the preparation of pipes of high surface smoothness and excellent mechanical properties. Furthermore, it relates to a process for preparing such a polymer composition and to pipes made therefrom.

Pipes made of polymeric material are frequently used for various purposes such as fluid transport, i.e. transport of liquids and gases. The fluid may be pressurized, e.g. when transporting natural gas or tap water, or non-pressurized, e.g. when transporting sewage (waste-water), drainage, for storm water applications or indoor sewage (soil and waste discharge). Moreover, the transported fluid may have varying temperature, usually within the range of 0°C to 50°C. Pressureless (non-pressure) pipes may also be used for cable and pipe protection and for culvert system (e.g. road and rail).

Polypropylene-based polymers have many characteristics which make them suitable for applications like pipes, fittings, moulded articles, foams. Polypropylene as a pipe material is mainly used in non-pressure applications (pipes and fittings) and profiles. However, polypropylene is also used for pressure pipes, mainly hot water and industrial pipes.

For non-pressure pipe systems, high stiffness is needed to provide sufficient resistance, e.g. to soil pressure. Normally, polypropylene products of high stiffness are based on high molecular weight materials which are often nucleated by adding nucleating agents, i.e. crystallization starts at a higher temperature and crystallization speed is high.. However, in polymers of high molecular weight the tendency of polymeric chains to be oriented is more pronounced. As a consequence, these high molecular weight polymers will result in high process shrinkage since the oriented polymeric chains are striving to go back in the non-oriented stage when the melt is leaving the die or extruder die head. Since shrinkage normally increases with increasing extrusion speed, this poses a significant restriction to production rate.

Furthermore, due to the tendency of high molecular weight polymers to be oriented, residual stress in the final product is increasing due to fast crystallization of the high modulus material if cooling is applied before the material has been able to recover after orientation in the melt, whereas surface properties such as surface smoothness are poor. However, surface properties of the final polymer are relevant for the notch resistance of the final product. Thus, pipe surfaces having imperfections and/or scratches result in very low notch resistance.

To increase output rate of the extruder (e.g. for pipe production), a polymer of high flowability would be preferred. Furthermore, at a specific output rate, melt pressure and melt temperature at the end of the extruder should be on a low level but also sufficiently high to ensure a good melt homogeneity (e.g. normally above 190°C for polypropylene). When increasing the output of the extruder, the melt pressure and hence the melt temperature are increasing based on the flow restrictions, i.e. the die or die head. With regard to melt pressure, restrictions result from the extruder equipment whereas at high melt temperature polymer degradation is more likely to occur. For improving flowability, the polymeric melt should be of low viscosity, e.g. by reducing molecular weight. However, as discussed above, high molecular weight is preferred for realizing high stiffness. Furthermore, by using low viscosity material, the resulting mechanical properties are usually not sufficient for meeting the requirements as defined in international standards like EN 1852, prEN13476. Normally, melt flow rate values of polymers for non-pressure pipe applications are kept at a low level to fulfil the standard requirements.

As discussed above, to realize a specific output rate a lower melt temperature would be preferred. However, a too low melt temperature normally results in worse surface properties, e.g. poor surface smoothness, and as a consequence thereof in worse mechanical properties, e.g. low notch resistance.

Thus, there is still a need for polypropylene-based compositions for pipes having improved processability while maintaining mechanical properties on a high level. Considering the problems discussed above, it is an object of the present invention to provide a polypropylene-based composition that can be processed at lower melt temperature and/or melt pressure but still results in a material of high stiffness, excellent surface properties like high surface smoothness, good long term properties, high notch resistance and high impact values at low temperature.

These objects are solved by providing a polymer composition, comprising

(i) a polypropylene-based matrix which comprises at least one polypropylene random copolymer prepared by copolymerization of propylene with an olefin comonomer, wherein the amount of olefin comonomer units within the matrix is from 0.2 wt% to 5.0 wt%, based on the weight of the polypropylene-based matrix, and

(ii) an elastomeric copolymer of propylene and at least one olefin comonomer, the polymer composition having a storage modulus G' at a loss modulus G"=5 kPa of G'(5 kPa) $\leq$ 3100 Pa, measured at 220°C and a tensile modulus of at least 1350 MPa, measured according to ISO 527-2/1B at 1 mm/min and 23°C.

An essential feature of the invention is the presence of a polypropylene random copolymer, prepared by copolymerization of propylene with an olefin comonomer. As will be discussed below, the polypropylene-based matrix can be made of one polypropylene random copolymer only or can optionally comprise further polymeric components such

as a polypropylene homopolymer or a second polypropylene random copolymer.

According to the present invention, the polypropylene-based matrix needs to have an amount of olefin comonomer units originating from the one or more random copolymer components within the range of 0.2 wt% to 5.0 wt%.

As already indicated above, a random copolymer is one of the three main types of polypropylene. In general, a polypropylene random copolymer is obtained when propylene is polymerized with at least one comonomer so as to result in a random or statistical distribution of the comonomer within the polymer chain. The amount and type of comonomer has a significant influence on a number of properties like crystallization behaviour, stiffness, melting point or flowability of the polymer melt. To solve the objects of the present invention, in particular to provide an improved balance between processability and mechanical properties, it is necessary to keep the amount of olefin comonomer units originating from the polypropylene random copolymer within the range given above.

In a preferred embodiment, the polypropylene-based matrix has an amount of olefin comonomer units within the range of 0.2 wt% to 4.0 wt%. In other preferred embodiments, the amount of olefin comonomer units within the matrix is from 0.5 wt% to 3.0 wt%, from 0.5 wt% to 2.0 wt%, or from 0.5 wt% to 1.5 wt%.

The olefin comonomer is preferably selected from ethylene, $C_4$ to $C_{10}$ alpha-olefins such as 1-butene, 1-hexene or 1-octene, or mixtures thereof. Ethylene is the preferred comonomer.

When ethylene is used as the olefin comonomer, its amount within the polypropylene-based matrix is preferably within the range of 0.2 to 5.0 wt%, more preferably 0.2 wt% to 4.0 wt%, even more preferably 0.4 wt% to 3.0 wt%, and most preferably 0.6 wt% to 2.0 wt%.

In case the matrix is made of the polypropylene random copolymer only, the ranges given above correspond to the amount of comonomer units within the random copolymer. However, if further components are present in the polypropylene-based matrix, the random copolymer can have an amount of olefin comonomer units exceeding the ranges given above.

In a preferred embodiment, the polypropylene-based matrix is unimodal. In such a case, the matrix is preferably made of the polypropylene random copolymer only. However, it might also comprise one or more additional polymeric components having a molecular weight adapted to the molecular weight of the random copolymer so as to maintain the unimodal molecular weight distribution.

According to another preferred embodiment, the polypropylene-based matrix is multimodal, e.g. bimodal.

The expression "multimodal" used herein refers to the modality of the polymer, i.e. the form of its molecular weight distribution curve, which is the graph of the molecular weight fraction as a function of its molecular weight. As will be explained below, the polymer components of the present invention can be produced in a sequential step process, using reactors in serial configuration and operating at different reaction conditions. As a consequence, each fraction prepared in a specific reactor will have its own molecular weight distribution. When the molecular weight distribution curves from these fractions are superimposed to obtain the molecular weight distribution curve of the final polymer, that curve may show two or more maxima or at least be distinctly broadened when compared with curves for the individual fractions. Such a polymer, produced in two or more serial steps, is called bimodal or multimodal, depending on the number of steps.

As already indicated above, the polypropylene-based matrix can comprise further polymeric components, in particular for obtaining a multimodal matrix.

Preferably, the polypropylene-based matrix further comprises a polypropylene homopolymer. Within the context of the present invention, a polypropylene homopolymer is defined to be a polymer consisting of more than 99.8 wt%, preferably more than 99.9 wt%, even more preferably 99.99 wt% of propylene units.

If units other than propylene units are present, these originate preferably from an olefin such as ethylene.

The polypropylene homopolymer can be unimodal or multimodal.

In a preferred embodiment, the polypropylene homopolymer fraction has a melt flow rate $MFR_{2.16kg/230°C}$ of less than 20 g/10 min. In general, melt flow rate is related to flowability of the polymeric melt at a specific temperature when subjected to a specific load. High melt flow rate values indicate a polymeric melt of low viscosity, and vice versa.

As will be explained below in greater detail, if a polypropylene homopolymer is present, it can be prepared in a first step, i.e. before preparing the polypropylene random copolymer and the elastomeric copolymer, or at a later stage. If prepared in a later stage, the homopolymer can be reactor-blended with the random copolymer already prepared before, thereby resulting in a matrix from which only a total melt flow rate can be determined but not the melt flow rate of each component within the blend. However, even if obtained as a reactor blend, the $MFR_{2.16kg/230°C}$ of the polypropylene homopolymer refers to a pure homopolymer fraction. In other words, it is the melt flow rate value of the polypropylene homopolymer that would have been obtained if polymerized without the presence of further components.

In other preferred embodiments, the polypropylene homopolymer fraction has a melt flow rate $MFR_{2.16kg/230°C}$ of less than 10 g/10 min, less than 5 g/10 min or even less than 3 g/10 min.

Preferably, the average molecular weight of the polypropylene random copolymer is higher than the average molecular weight of the polypropylene homopolymer, if present.

In another preferred embodiment, the polypropylene-based matrix comprises a second polypropylene random

copolymer fraction, either as an alternative to the polypropylene homopolymer or in addition to the homopolymer, wherein both random copolymers differ in their amount of olefin comonomer units. Of course, the amount of olefin comonomer units of each polypropylene random copolymer fraction has to be chosen so as to result in a polypropylene-based matrix with an olefin comonomer content of 0.2 to 5 wt%.

A further essential feature of the polymer composition of the present invention is the presence of an elastomeric copolymer of propylene and at least one olefin comonomer. The presence of such an elastomeric propylene copolymer improves impact performance of the final polymer. The conditions for the copolymerization are within the limits of conventional conditions for ethylene-propylene rubber (EPM) production. Typical conditions are disclosed e.g. in Encyclopedia of Polymer Science and Engineering, second edition, vol. 6, p. 545-558. An elastomeric product is obtained when the comonomer content of the polymer is within a certain range.

Suitable olefin comonomers to be copolymerized with propylene can be selected from ethylene, $C_4$ to $C_{10}$ alpha-olefins such as 1-butene, 1-hexene or 1-octene, or mixtures thereof. Preferably, ethylene is used.

Preferably, the elastomeric copolymer contains olefin comonomer units in an amount of 10 to 70 wt%, more preferably 20 to 50 wt%, based on the weight of the elastomeric copolymer.

When ethylene is used as an olefin comonomer, the elastomeric copolymer preferably contains ethylene units in an amount of 10 to 70 wt%, based on the weight of the elastomeric copolymer. In other preferred embodiments, the amount of ethylene units within the elastomeric copolymer is from 10 wt% to 60 wt%, from 20 wt% to 55 wt%, from 25 wt% to 50 wt%, or from 30 wt% to 50 wt%.

As indicated above, the presence of an elastomeric ethylene-propylene copolymer improves impact properties as determined e.g. by measurement of Charpy notched impact strength. However, if the amount of elastomeric copolymer within the final polymer composition is too high, this might have a detrimental effect on other properties like stiffness or processability.

Preferably, the polymer composition of the present invention comprises an amount of elastomeric copolymer within the range of 5 wt% to 30 wt%, based on the weight of the polymer composition. In other preferred embodiments, the amount of elastomeric copolymer within the final polymer composition is from 7 wt% to 20 wt% or from 10 wt% to 15 wt%.

According to a further essential feature of the present invention, the polymer composition has a storage modulus G' at a loss modulus G"=5 kPa, of $G'(5kPa) \leq 3100$ Pa, measured at 220°C. With a storage modulus of 3100 Pa or less, process shrinkage, residual stress, surface smoothness and notch resistance as well as impact strength can be further improved. This is insofar surprising as a reduction in melt elasticity (i.e. storage modulus) normally has a detrimental effect on notch resistance and impact strength, in particular at low temperature.

The storage modulus G' is related to the molecular weight distribution. In general, storage modulus values increase with increasing molecular weight. However, G' is also highly dependent on the shape of the molecular weight distribution curve. In particular, it is a measure of the high molecular weight end of the molecular weight distribution.

In a preferred embodiment, the polymer composition has a storage modulus G' at a loss modulus G" of 5 kPa, of $G'(5kPa) \leq 2900$ Pa, more preferably 2700 Pa or less, even more preferably 2500 Pa or less, and most preferably 2300 Pa or less, measured at 220°C.

To have a material of high stiffness, the polymer composition has a tensile modulus of at least 1350 MPa. In preferred embodiments, the polymer composition of the present invention has a tensile modulus of at least 1400 MPa, at least 1475 MPa, at least 1500 MPa or at least 1600 MPa.

In the so-called Rheotens test, a melt strand, e.g. generated by extrusion, is elongated by drawing down with a defined acceleration. The haul off force as a function of draw down velocity is recorded. The maximum values for haul off force and draw down velocity, i.e. $F_{max}$ and $v_{max}$, at failure of the strand indicate melt strength and drawability of the melt. Curves obtained by Rheotens tests of different polymers very sensitively reflect a change in molecular weight distribution, phase structure (e.g. degree of long chain branching) and crystallization speed. Further details about the Rheotens test in general can be found e.g. in EP-A-1301343.

In a preferred embodiment, the polymer composition has a ratio of drawability $v_{max}$ to melt strength $F_{max}$ of more than 2.1 mm/s*cN, measured according to the Rheotens test at an extrusion temperature of 200 °C. More preferably, the ratio of drawability $v_{max}$ to melt strength $F_{max}$ of the polymer composition in the Rheotens test is more than 2.5 mm/s*cN, even more preferably more than 2.7 mm/s*cN.

With the Rheotens test, it is possible to characterize the ability of a material to efficiently fill a mould which is a very relevant property e.g. in the manufacturing process of single or double wall pipes (by vacuum and/or air pressure) before and during cooling and crystallization in the mould blocks. Thus, by having a low force combined with a good elongation ability, the mould filling will be fast and efficient, giving a good processability. It is also beneficial to have a low force in general as long as the elongation is sufficient for the filling of the mould, i.e. before the material crystallizes and will break as seen in the Rheotens test.

In a preferred embodiment, the polymer composition has a haul off force F of 60 cN or less at a velocity v = 80 mm/s in the Rheotens test at an extrusion temperature of 200 °C. More preferably, the haul off force F at a velocity v =

80 mm/s is 50 cN or less, even more preferably 40 cN or less and most preferably 35 cN or less.

In another preferred embodiment, the polymer composition has a drawabiliy v of 40 mm/s or more at a haul off force F = 20 cN in the Rheotens test at an extrusion temperature of 200 °C. More preferably, the drawability v at a haul off force F = 20 cN is 50 mm/s or more, even more preferably 60 mm/s or more.

To have a good balance between flowability of the melt and mechanical properties, the polymer composition preferably has a melt flow rate $MFR_{2.16kg/230°C}$ within the range of 0.2 to 10 g/10 min, more preferably 0.25 to 8 g/10 min, even more preferably 0.4 to 6.5 g/10 min, and most preferably 0.5 to 5 g/10 min.

The polymer composition preferably has a polydispersity index PI, which is an indication of the breadth of the molecular weight distribution, of 2.5 to 6.0. In other preferred embodiments, PI of the matrix is within the range of 3.0 to 5.0, 3.0 to 4.5 or 3.0 to 4.0. The polydispersity index PI is calculated according to the following equation:

$$PI = 10^5 \text{ Pa}/G_C$$

wherein $G_C$ in Pa is the cross over modulus at which $G'=G''=G_C$ , G' and G" indicating the storage modulus and the loss modulus, respectively.

The measurements have been done according to ISO 6421-10. Measurements were made at 220°C on a Physica MCR 300 rheometer with a plate-plate fixture, plate diameter 25 mm, and a distance between the plates of 1.8 mm.

In addition to the components discussed above, the polymer composition may comprise conventional adjuvants, such as additives, fillers and reinforcing agents.

As additives, the following can be mentioned: nucleating agents, process and heat stabilizers, pigments and other colouring agents including carbon black. Depending on the type of additive, these may be added in an amount of 0.01 to 5 wt%, based on the weight of the polymer composition.

In a preferred embodiment, the polymer composition includes 0.05 to 3 wt%, based on the weight of the polymer composition, of one or more alpha-nucleating agents such as talc, polymerized vinyl compounds such as polyvinyl cyclohexane, dibenzylidene sorbitol, sodium benzoate, and di(alkylbenzylidene)sorbitol. Except for talc, the alpha-nucleating agent is usually added in small amounts of 0.0001 to 1 wt%, more preferably 0.001 to 0.7 wt%. Since talc can act both as a nucleating agent and as a filler, it can be added in higher amounts. When added as a nucleating agent, talc is preferably added in an amount of 0.05 to 3 wt%, more preferably 0.1 to 2 wt%, based on the weight of the polymer composition. Further details about these nucleating agents can be found e.g. in WO 99/24479 and WO 99/24501.

The present invention also provides a process for the preparation of the polymer composition described above. The process of the present invention comprises the following steps in any sequence:

(i) copolymerization of propylene with an olefin comonomer to result in a polypropylene random copolymer, and

(ii) copolymerization of propylene with an olefin comonomer to result in an elastomeric copolymer.

Since the polypropylene random copolymer is present in a higher amount, it is acting as a matrix into which the elastomeric copolymer is included to improve impact properties.

Preferably, the reaction steps (i) and/or (ii) are carried out in at least one loop reactor and/or at least one gas phase reactor.

It is preferred to have the sequence (i) $\rightarrow$ (ii).

The amount and feed rate of olefin comonomer fed into the reactor for copolymerization with propylene are such that the polypropylene-based matrix has an amount of olefin comonomer units of 0.2 to 5 wt%, based on the weight of the matrix. Preferably, ethylene is used as the olefin comonomer.

When the matrix is made of the random copolymer only, the amount of olefin comonomer units within the matrix corresponds to the amount of olefin comonomer units within the random copolymer. However, the matrix may include further polymeric components, as already discussed above.

According to a preferred embodiment, the first reaction step is carried out in a loop reactor, this step optionally also comprising at least one gas phase reactor to which the product of the loop reactor is transferred to continue polymerization. Preferably, any reaction medium used and any non-reacted reagents are at least partly removed before transfer from the loop reactor to the gas phase reactor is performed.

In a further preferred embodiment, the first process step is carried out in a loop reactor, optionally followed by further polymerisation in a gas phase reactor, and the second process step and optionally further process steps are carried out in separate gas phase reactors.

For the present invention, conventional loop and gas phase reactors which are commonly known in the relevant technical field can be used.

In a preferred embodiment, reaction conditions are chosen which result in a unimodal polypropylene random copolymer. Of course, when the polypropylene-based matrix is made of the random copolymer only, a unimodal matrix is obtained.

However, within the present invention, it is also possible to effect polymerization of the random copolymer under conditions which result in a multimodal, e.g. bimodal polymer. This is preferably accomplished by using a loop reactor in serial configuration with one or more gas phase reactors.

Preferably, the process of the present invention comprises an additional step (iii) for polypropylene homopolymerization. When using such a polypropylene homopolymerization step, the process steps are preferably carried out either in the sequence (i)→(iii)→(ii) or the sequence (iii)→(i)→(ii)

If the polypropylene homopolymer is prepared first, reaction conditions are chosen so as to preferably have a $MFR_{2.16kg/230°C}$ of less than 20g/10 min for the homopolymer.

By using a loop reactor and at least one gas phase reactor in serial configuration and working at different conditions, a multimodal (e.g. bimodal) polypropylene homopolymer can be obtained. However, within the context of the present invention, the polypropylene homopolymer can also be unimodal.

As an alternative, the polypropylene random copolymer is prepared first. Again, polymerization can be effected by using a loop reactor only or a loop reactor in serial configuration with at least one gas phase reactor, the latter configuration resulting in a multimodal (e.g. bimodal) polypropylene random copolymer.

Preferably, a loop reactor for preparing a polypropylene homopolymer or random copolymer is operated at a temperature of 50 °C to 100 °C and a pressure of 3000 kPa to 5500 kPa. In a preferred embodiment, at least one loop reactor is operated under supercritical conditions. As an example, supercritical conditions can include a temperature of at least 92°C and a pressure of at least 4600 kPa.

Preferably, a gas phase reactor for preparing a polypropylene homopolymer or random copolymer is operated at a temperature of 50 °C to 110 °C and a pressure of 1500 kPa to 4000 kPa.

To further improve the balance between processability and mechanical properties of the polymer composition, a specific split between a first process step producing a first component and a second process step producing a second component can be chosen. The split indicates the weight ratio between different polymeric components prepared in different reaction steps.

Preferably, the split between process step (i) and process step (ii), irrespective of their sequence, is from 95 : 5 to 70 : 30, more preferably from 95 : 5 to 80 : 20 and even more preferably from 95 : 5 to 85 : 15.

When using a polypropylene homopolymerization step (iii), the split between the combined process steps (i) and (iii) and the process step (ii) is preferably from 95 : 5 to 70 : 30, more preferably from 95 : 5 to 80 : 20 and even more preferably from 95 : 5 to 85 : 15.

As a catalyst for the preparation of the polypropylene homopolymer and/or the polypropylene random copolymer, any stereo-specific catalyst for propylene polymerization can be used, which is capable of catalyzing polymerization and copolymerization of propylene and comonomers at a pressure of 500-10000 kPa, in particular 2500-8000 kPa, and at a temperature of 40-110°C, in particular 60-110°C.

Preferably, the catalyst comprises a high-yield Ziegler-Natta type catalyst which can be used at high polymerization temperatures of 80°C or more.

Generally, the Ziegler-Natta catalyst used in the present invention comprises a catalyst component, a cocatalyst component, an external donor, the catalyst component of the catalyst system primarily containing magnesium, titanium, halogen and an internal donor. Electron donors control the sterospecific properties and/or improve the activity of the catalyst system. A number of electron donors including ethers, esters, polysilanes, polysiloxanes, and alkoxysilanes are known in the art.

Preferably, the Ziegler Natta catalyst includes an electron doner.

The catalyst preferably contains a transition metal compound as a procatalyst component. The transition metal compound is selected from the group consisting of titanium compounds having an oxidation degree of 3 or 4, vanadium compounds, zirconium compounds, cobalt compounds, nickel compounds, tungsten compounds and rare earth metal compounds, titanium trichloride and titanium tetrachloride being particularly preferred.

It is preferred to use catalysts which can withstand the high temperatures prevailing in the loop reactor. The conventional Ziegler-Natta catalysts for isotactic polymerization of propylene generally have an operating temperature limit of around 80°C, above which they either become deactivated or lose their stereo-selectivity. This low polymerization temperature may put a practical limit on the heat removal efficiency of the loop reactor.

One preferred catalyst to be used according to the invention is disclosed in EP 591 224 which discloses a method for preparing a procatalyst composition from magnesium dichloride, a titanium compound, a lower alcohol and an ester of phthalic acid containing at least five carbon atoms. According to EP 591 224, a trans-esterification reaction is carried out at an elevated temperature between the lower alcohol and the phthalic acid ester, whereby the ester groups from the lower alcohol and the phthalic ester change places.

Magnesium dichloride can be used as such or it can be combined with silica, e.g. by absorbing the silica with

a solution or slurry containing magnesium dichloride. The lower alcohol used may preferably be methanol or ethanol, particularly ethanol.

The titanium compound used in the preparation of the procatalyst is preferably an organic or inorganic titanium compound, which is at the oxidation state of 3 or 4. Also other transition metal compounds, such as vanadium, zirconium, chromium, molybdenum and tungsten compounds can be mixed with the titanium compound. The titanium compound usually is a halide or oxyhalide, an organic metal halide, or a purely metal organic compound in which only organic ligands have been attached to the transition metal. Particularly preferred are the titanium halides, especially titanium tetrachloride.

The alkoxy group of the phthalic acid ester used comprises at least five carbon atoms, preferably at least eight carbon atoms. Thus, as the ester may be used e.g. propylhexyl phthalate, dioctyl phthalate, di-isodecyl phthalate and ditridecyl phthalate. The molar ratio of phthalic acid ester and magnesium halide is preferably about 0.2:1.

The transesterification can be carried out, e.g. by selecting a phthalic acid ester - a lower alcohol pair, which spontaneously or by the aid of a catalyst, which does not damage the procatalyst composition, transesterifies the catalyst at an elevated temperature. It is preferred to carry out the transesterification at a temperature which is 110-115°C, preferably 120-140°C.

In a preferred embodiment, the Ziegler-Natta catalyst system can be modified by polymerizing in the presence of the catalyst a vinyl compound of the formula

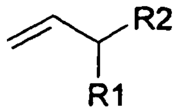

wherein $R_1$ and $R_2$ together form a 5 or 6-membered saturated, unsaturated or aromatic ring or independently represent an alkyl group comprising 1 to 4 carbon atoms, and the modified catalyst is used for the preparation of the polymer composition. The polymerized vinyl compound can act as a nucleating agent. Further details about this modification are provided in EP 1 028 985.

Preferably, in the process as described herein a nucleating agent is added selected from talc, polymerized vinyl compounds, dibenzylidene.

The catalyst prepared by the method above is used together with an organometallic cocatalyst and with an external donor. Generally, the external donor has the formula

$$R_nR'_mSi(R''O)_{4-n-m}$$

wherein

R and R' can be the same or different and represent a linear, branched or cyclic aliphatic, or aromatic group;

R" is methyl or ethyl;

n is an integer of 0 to 3;

m is an integer of 0 to 3; and

n+m is 1 to 3.

In particular, the external donor is selected from the group consisting of cyclohexyl methylmethoxy silane (CHMMS), dicyclopentyl dimethoxy silane (DCPDMS), diisopropyl dimethoxy silane, di-isobutyl dimethoxy silane, and di-t-butyl dimethoxy silane.

An organoaluminium compound is used as a cocatalyst. The organoaluminium compound is preferably selected from the group consisting of trialkyl aluminium, dialkyl aluminium chloride and alkyl aluminium sesquichloride.

According to the invention, such catalysts are typically introduced into the first reactor only. The components of the catalyst can be fed into the reactor separately or simultaneously or the components of the catalyst system can be precontacted prior to the reactor.

Such precontacting can also include a catalyst prepolymerization prior to feeding into the polymerization reactor proper. In the prepolymerization, the catalyst components are contacted for a short period with a monomer before feeding to the reactor.

As discussed above, in preferred embodiments the random copolymer and optionally the homopolymer are prepared first, whereas the elastomeric copolymer is prepared in a final step. Preferably, the elastomeric copolymer is prepared in a gas phase reactor. Optionally, two or more gas phase reactors can be used. The one or more gas phase reactors for the preparation of the elastomer can be in serial configuration with the reactors used for the preparation of the homopolymer and random copolymer. When using such a reactor configuration, the elastomeric copolymer is produced in the presence of the homopolymer/random copolymer matrix and dispersed therein.

As an alternative, the elastomeric copolymer can be prepared separately and mixed with the polypropylene-based matrix at a later stage.

In general, the conditions for the preparation of the elastomeric copolymer are within the limits of conventional conditions for ethylene-propylene rubber (EPM) production. Typical conditions are disclosed e.g. in Encyclopedia of Polymer Science and Engineering, second edition, vol. 6, p. 545-558. An elastomeric product is obtained when the comonomer content of the polymer is within a certain range.

The catalytic system described above for the preparation of the polypropylene homopolymer and random copolymer can also be used for the preparation of the elastomeric copolymer.

The present invention also provides a pipe and pipe fittings prepared from the polymer composition discussed above, e.g. by extrusion or injection moulding. The polymer composition can be used for pressure as well as non-pressure pipes. Preferably, it is used for non-pressure pipes.

In particular, within the context of the present invention smooth solid wall pipes and structured wall pipes can be mentioned. Structured wall pipes include e.g. single layer corrugated pipes, ribbed pipes, twin wall pipes with hollow sections, multilayer pipes with or without hollow sections or foamed layers, and spirally wound pipes with or without hollow sections with smooth or corrugated pipe design.

In general, pipes with thin sections, either smooth solid wall pipes of smaller diameter or structured wall pipes with thin sections are more sensitive to the formation of cracks. Furthermore, due to the three-dimensional structure of structured wall pipes, high local stress can be generated when subjected to external load conditions. However, pipes made of the polymer composition of the present invention have high notch resistance and high impact values at low temperature.

The pipe of the present invention preferably has a resistance to accelerated crack growth in the notched pipe test according to ISO 13479 at 80°C and 4.2 MPa of at least 50 h, more preferably at least 90 h, even more preferably at least 130 h, and most preferably at least 200 h.

According to a preferred embodiment, the pipe has a Charpy impact strength, measured according to ISO 179/1eA at -20°C, of at least 3.0 kJ/$m^2$, more preferably at least 4.0 kJ/$m^2$, even more preferably at least 5.0 kJ/$m^2$, and most preferably at least 6.0 kJ/$m^2$.

The present invention also provides an article having a surface roughness $R_z$, measured according to ISO 4287, of less than 18 $\mu$m, more preferably less than 14 $\mu$m, even more preferably less than 10 $\mu$m, and most preferably less than 6 $\mu$m.

Preferably, the article is a pipe, in particular one of those pipes mentioned above.

The invention is now described in further detail by making reference to the following examples.

## Examples

### 1. Measuring methods

#### (a) Melt flow rate

Melt flow rate was measured according to ISO 1133, either at 230°C and 2.16 kg ($MFR_{2.16kg/230°C}$) or at 230°C and 10 kg ($MFR_{10kg/230°C}$).

#### (b) Tensile properties

Tensile modulus was determined according to ISO 527-2/1 B at 1 mm/min. and 23°C.

#### (c) Notch resistance

Notch resistance was determined in the notched pipe test according to ISO 13479 at 80°C and 4.2 MPa on a 32 mm diameter pipe with a wall thickness of 3 mm, condition water-in-water. The circumferential (hoop) stress is based on the dimensions of the unnotched pipes. The remaining pipe wall ligament after machining of each notch was 0.8 times the wall thickness.

The pipe extruder used for preparing the pipe to be tested was a conventional pipe extruder equipped with a

die head for producing diameter 32 mm pipes with a wall thickness of 3.0 mm.
Extruder screw diameter: 45 mm
Screw length: 30 * diameter D (30 D)
Line speed: 6 m/min
RPM: Adjusted in order to give the target output
Temperature settings: 180°C-220°C

(d) Storage modulus G'

Storage modulus G' was determined on a dynamic rheometer at G" = 5 kPa and 220°C. Measurements were made on a Physica MCR 300 rheometer with a plate-plate fixture, plate diameter 25 mm, and a distance between the plates of 1.8 mm. The frequency range was 0.01-100 Hz at a measuring temperature of 220°C. All measurements were made in nitrogen atmosphere.

(e) Notched impact strength

Notched impact strength was determined according to ISO 179/1eA at -20°C, based on compression-moulded samples.

(f) Surface roughness Rz

Surface roughness Rz (average of 6 measurements) was determined according to ISO 4287 on the inner surface of the diameter 32 mm pipe samples.

(g) Rheotens test

The test is performed with a Rheotens apparatus from Göttfert in a standard climatized room with controlled room temperature of 23°C. The Rheotens apparatus is combined with an extruder/melt pump for continuously feeding the melt strand. The extrusion temperature is 200 °C, a capillary die with a diameter of 2 mm and a length of 6 mm is used and the acceleration of the melt strand drawn down is 120 mm/s$^2$. The distance between the die and the wheels is 100 mm.

(h) Polydispersity index PI

The polydispersity index PI is calculated according to the following equation:

$$PI = 10^5\ Pa/G_C$$

wherein $G_C$ in Pa is the cross over modulus at which G'=G"=$G_C$.

The measurements have been made according to ISO 6421-10. Measurements were made at 220°C. G' and G" indicate storage modulus and loss modulus, respectively. Measurements were made on a Physica MCR 300 rheometer with a plate-plate fixture, plate diameter 25 mm, and a distance between the plates of 1.8 mm.

All mechanical properties were determined on samples prepared 3 weeks ± 2 days before the measurement.

2. Materials

Inventive examples 1 and 2 have been prepared using two loop reactors and one gas phase reactor. The polypropylene-based matrix comprises a polypropylene random copolymer in combination with a polypropylene homopolymer wherein the random copolymer is prepared first, followed by the preparation of the homopolymer. Ethylene was used as a comonomer for the random copolymer and the elastomer.

In inventive examples 3 and 4, the polypropylene-based matrix was obtained by preparing a polypropylene random copolymer in a loop reactor, followed by preparing a polypropylene homopolymer in a first gas phase reactor. Subsequently, the elastomeric copolymer was produced in a second gas phase reactor. Ethylene was used as a comonomer for the random copolymer and the elastomer.

In inventive examples 1, 2, 3 and 4, a Ziegler-Natta type catalyst was used which had been modified by transesterification and polymerization of a vinyl compound as described above.

The reference materials were prepared using either one or two loop reactors and a gas, as shown in table 2. phase reactor. The reference materials have a pure polypropylene homopolymer matrix (i.e. no olefin comonomer units within the matrix) blended with an elastomeric ethylene-propylene copolymer. A Ziegler-Natta type catalyst was used. For Ref. 2, a Ziegler-Natta type catalyst was used which had been modified by transesterification and polymerization of a vinyl compound as described above. Ref. 1 and 2 were nucleated with < 1 wt% talc.

Further details about the manufacturing processes are given in Tables 1-2.

Table 1: Process parameters of the inventive examples

| | Ex. 1 | Ex. 2 | Ex. 3 | Ex. 4 |
|---|---|---|---|---|
| | | | | |
| Type of reactor | loop | loop | loop | loop |
| Temp., °C | 68 | 68 | 80 | 80 |
| | | | | |
| Type of reactor | loop | loop | gas phase | gas phase |
| Temp., °C | 68 | 68 | 95 | 95 |
| | | | | |
| Type of reactor | gas phase | gas phase | gas phase | gas phase |
| Temp., °C | 70 | 70 | 60 | 60 |

Table 2: Process parameters of the reference examples

| | Ref. 1 | Ref. 2 | Ref. 3 | Ref. 4 |
|---|---|---|---|---|
| Donor | (1) | (1) | (2) | (2) |
| Type of reactor | loop | loop | loop | loop |
| Temp., °C | 68 | 68 | 68 | 68 |
| Type of reactor | | loop | loop | loop |
| Temp., °C | | 68 | 68 | 68 |
| Type of reactor | gas phase | gas phase | gas phase | gas phase |
| Temp., °C | 70 | 70 | 70 | 70 |
| (1) di-cyclopentadienyl-di-methoxysilane<br>(2) cyclohexyl-di-methoxymethylsilane | | | | |

The properties of the polymer compositions are summarized in Tables 3 and 4.

Table 3: Properties of the inventive polymer compositions

| | Ex. 1 | Ex. 2 | Ex. 3 | Ex. 4 |
|---|---|---|---|---|
| $MFR_{2.16kg/230°C}$, g/10 min | 0.31 | 0.43 | 0.75 | 3.3 |
| Tensile modulus, MPa | 1612 | 1530 | 1495 | 1413 |
| Charpy impact strength at -20°C, $kJ/m^2$ | 4.5 | 5.6 | 4.9 | 4.7 |
| Storage modulus G'(G"=5 kPa), Pa | 2500 | 2609 | 2001 | 3087 |
| Polydispersity index PI | 4.3 | 4.4 | 3.3 | |
| Notched pipe test at 80°C and 4.2 MPa, h | 227<br>374 | 236<br>223 | 154 R<br>528 R | 150<br>194 |
| | average 300 | average 230 | average 341 | average 172 |

(continued)

| | Ex. 1 | Ex. 2 | Ex. 3 | Ex. 4 |
|---|---|---|---|---|
| $R_z$, μm | 17 | 13 | 5 | 5 |
| C2 content in matrix, wt% | 0.4 | 0.6 | 1.2 | 1.2 |
| Total xylene solubility, wt% | 12.2 | 12.9 | 11.4 | 10.5 |
| ratio of drawability $v_{max}$ to melt strength $F_{max}$, mm/s*cN | 2.8 | | | |
| Haul off force F at v=80 mm/s, cN | 29 | | | |
| R: still running | | | | |

Table 4: Properties of the reference materials

| | Ref. 1 | Ref.2 | Ref.3 | Ref.4 |
|---|---|---|---|---|
| $MFR_{2.16kg/230°C}$, g/10 min | 0.27 | 0.27 | 0.84 | 0.3 |
| Tensile modulus, MPa | 1429 | 1826 | 1360 | 1300 |
| Charpy impact strength at -20°C, kJ/m$^2$ | 6.3 | 4.2 | 4.8 | 4 |
| Storage modulus G'(G"=5kPa), Pa | 2209 | 3007 | 2389 | 2612 |
| Polydispersity index PI | 3.6 | 5.7 | 3.8 | |
| Notched pipe test at 80°C and 4.2 MPa, h | 85<br>85 | 110<br>121 | 36<br>56 | 64<br>92 |
| | average 86 | average 115 | average 46 | average 78 |
| Rz, μm | 17 | >30(1) | 4 | 19 |
| C2 content in matrix, wt% | 0 | 0 | 0 | 0 |
| Total xylene solubility, wt% | 12 | 10 | 13 | 13 |
| ratio of drawability $v_{max}$ to melt strength $F_{max}$, mm/s*cN | 2.1 | 1.2 | | 1.4 |
| Haul off force F at v=80 mm/s, cN | 40 | 76 | | 56 |
| (1) actual value above measurement range of equipment | | | | |

The results demonstrate that high notch resistance and high impact strength can be obtained when the matrix has a low amount of olefin comonomer units within the range defined above and the storage modulus of the polymer composition is kept below 3100 Pa. Even at high MFR values, which improve processability, the notch resistance of the inventive materials is still on a high level (see Ex. 3 and in particular Ex. 4) whereas the reference material of high MFR value (see Ref. 3) has a very low notch resistance.

## Claims

**1.** A polymer composition, comprising

(i) a polypropylene-based matrix which comprises at least one polypropylene random copolymer, prepared by copolymerization of propylene with an olefin comonomer, wherein the amount of olefin comonomer units within the matrix is from 0.2 wt% to 5 wt%, based on the weight of the polypropylene-based matrix, and
(ii) an elastomeric copolymer of propylene and at least one olefin comonomer,

the polymer composition having a storage modulus G' at a loss modulus G"=5 kPa of G'(G"=5 kPa) ≤ 3100 Pa, measured at 220°C and a tensile modulus of at least 1350 MPa, measured according to ISO 527-2/1B at 1min/min. and 23°C.

2. The polymer composition according to claim 1, wherein the olefin comonomer of the polypropylene random copolymer is selected from ethylene, $C_4$ to $C_{10}$ alpha-olefins, or mixtures thereof.

3. The polymer composition according to claim 2, wherein the olefin comonomer is ethylene.

4. The polymer composition according to claim 3, wherein the ethylene comonomer units within the polypropylene random copolymer are present in an amount of 0.2 to 4 wt%, based on the amount of the polypropylene-based matrix.

5. The polymer composition according to one of the preceding claims, wherein the polypropylene-based matrix is unimodal.

6. The polymer composition according to one of the claims 1 to 4, the polypropylene-based matrix further comprising a polypropylene homopolymer.

7. The polymer composition according to claim 6, wherein the polypropylene homopolymer has a melt flow rate $MFR_{2.16kg/230°C}$ of less than 20 g/10 min.

8. The polymer composition according to claim 6 or 7, wherein the polypropylene-based matrix is multimodal.

9. The polymer composition according to claim 8, wherein the weight average molecular weight of the polypropylene random copolymer is higher than the weight average molecular weight of the polypropylene homopolymer.

10. The polymer composition according to one of the preceding claims, wherein the olefin comonomer of the elastomeric copolymer is selected from ethylene, $C_4$ to $C_{10}$ alpha-olefins, or mixtures thereof.

11. The polymer composition according to claim 10, wherein the olefin comonomer is ethylene and the elastomeric copolymer comprises an amount of 10 to 70 wt% of ethylene comonomer units.

12. The polymer composition according to one of the preceding claims, comprising the elastomeric copolymer in an amount of 5 wt% to 30 wt%.

13. The polymer composition according to one of the preceding claims, wherein $G'(G''=5 \text{ kPa}) \leq 2900$ Pa.

14. The polymer composition according to one of the preceding claims, having a ratio of drawability $v_{max}$ to melt strength $F_{max}$ of more than 2.1 mm/s*cN, measured according to the Rheotens test at an extrusion temperature of 200 °C.

15. The polymer composition according to claim 14, wherein the ratio of drawability to melt strength is more than 2.5 mm/s*cN.

16. The polymer composition according to one of the preceding claims, having a haul off force F of 60 cN or less at a velocity v = 80 mm/s in the Rheotens test at an extrusion temperature of 200 °C.

17. The polymer composition according to one of the preceding claims, having a melt flow rate $MFR_{2.16kg/230°C}$ within the range of 0.2 to 10 g/10 min.

18. A process for preparing the polymer composition according to one of the claims 1 to 17, comprising the following steps in any sequence:

(i) copolymerization of propylene with an olefin comonomer to result in a polypropylene random copolymer, and
(ii) copolymerization of propylene with an olefin comonomer to result in an elastomeric copolymer.

19. The process according to claim 18, wherein the process step (i) and/or the process step (ii) are carried out in at least one loop reactor and/or at least one gas phase reactor.

20. The process according to claim 18 or 19, wherein the process steps are carried out in the following sequence: (i) $\rightarrow$ (ii).

21. The process according to one of the claims 18 to 20, wherein the first process step is carried out in a loop reactor, optionally followed by further polymerization in a gas phase reactor, and the second process step and optionally

further process steps are carried out in separate gas phase reactors.

**22.** The process according to one of the claim 18 to 21, further comprising a step (iii) for propylene homopolymerization.

**23.** The process according to claim 22, wherein the process steps are carried out either in the sequence (i) → (iii) → (ii) or the sequence (iii) → (i) → (ii).

**24.** The process according to one of the claims 18 to 23, wherein the split between the process step (i), optionally in combination with process step (iii), and the process step (ii), irrespective of their sequence, is from 95 : 5 to 70 : 30.

**25.** The process according to one of the claims 18 to 24, using a Ziegler-Natta catalyst including an electron donor.

**26.** The process according to claim 25, wherein the Ziegler-Natta catalyst is modified by polymerizing in the presence of the catalyst a vinyl compound of the formula

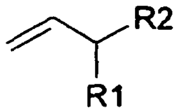

wherein $R_1$ and $R_2$ together form a 5 or 6-membered saturated, unsaturated or aromatic ring or independently represent an alkyl group comprising 1 to 4 carbon atoms, and the modified catalyst is used for the preparation of the polymer composition.

**27.** The process according to one of the claims 18 to 26, wherein a nucleating agent is added selected from talc, polymerized vinyl compounds, dibenzylidene sorbitol, sodium benzoate, di(alkylbenzylidene)sorbitol, or mixtures thereof.

**Patentansprüche**

**1.** Polymerzusammensetzung, umfassend:

(i) eine auf Polypropylen basierende Matrix, die zumindest ein statistisches Polypropylencopolymer umfaßt, das durch Copolymerisieren von Propylen mit einem Olefincomonomer hergestellt wurde, wobei die Menge der Olefincomonomer-Einheiten innerhalb der Matrix 0,2 bis 5,0 Gew.-% beträgt, und zwar auf das Gewicht der auf Polypropylen basierenden Matrix bezogen, und
(ii) ein elastomeres Copolymer von Propylen und zumindest einem Comonomer aus einem $\alpha$-Olefin,

wobei die Polymerzusammensetzung einen Speichermodul G' bei einem Verlustmodul G" = 5 kPa von G'(G" = 5 kPa) ≤ 3100 Pa, bei 220°C gemessen und einen Zugmodul von mindestens 1350 MPa aufweist, und zwar gemäß ISO 527-2/1 B bei 1 mm/min und 23°C gemessen.

**2.** Polymerzusammensetzung nach Anspruch 1, wobei das Olefincomonomer des statistischen Polypropylencopolymers aus Ethylen, $C_4$-$C_{10}$-$\alpha$-Olefinen oder Gemischen davon ausgewählt ist.

**3.** Polymerzusammensetzung nach Anspruch 2, wobei das Olefincomonomer Ethylen ist.

**4.** Polymerzusammensetzung nach Anspruch 3, wobei die Ethylencomonomer-Einheiten im statistischen Polypropylencopolymer in einer Menge von 0,2 bis 4,0 Gew.-% vorliegen, und zwar auf die Menge der auf Polypropylen basierenden Matrix bezogen.

**5.** Polymerzusammensetzung nach einem der vorstehenden Ansprüche, wobei die auf Polypropylen basierende Matrix unimodal ist.

**6.** Polymerzusammensetzung nach einem der Ansprüche 1 bis 4, wobei die auf Polypropylen basierende Matrix ferner ein Polypropylenhomopolymer umfaßt.

7. Polymerzusammensetzung nach Anspruch 6, wobei das Polypropylenhomopolymer eine Schmelzfließrate $MFR_{2,16\ kg/230°C}$ von weniger als 20 g/10 min aufweist.

8. Polymerzusammensetzung nach Anspruch 6 oder 7, wobei die auf Polypropylen basierende Matrix multimodal ist.

9. Polymerzusammensetzung nach Anspruch 8, wobei das Gewichtsmittel des Molekulargewichts des statistischen Polypropylencopolymers größer als das Gewichtsmittel des Molekulargewichts des Polypropylenhomopolymers ist.

10. Polymerzusammensetzung nach einem der vorstehenden Ansprüche, wobei das Olefincomonomer des elastomeren Copolymers aus Ethylen, $C_4$-$C_{10}$-$\alpha$-Olefinen oder Gemischen davon ausgewählt ist.

11. Polymerzusammensetzung nach Anspruch 10, wobei das Olefincomonomer Ethylen ist und das elastomere Copolymer eine Menge von 10 bis 70 Gew.-% Ethylencomonomer-Einheiten umfaßt.

12. Polymerzusammensetzung nach einem der vorstehenden Ansprüche, die das elastomere Copolymer in einer Menge von 5 bis 30 Gew.-% umfaßt.

13. Polymerzusammensetzung nach einem der vorstehenden Ansprüche, wobei G'(G" = 5 kPa) $\leq$ 2900 Pa ist.

14. Polymerzusammensetzung nach einem der vorstehenden Ansprüche, die ein Verhältnis zwischen der Dehnbarkeit $v_{max}$ und der Schmelzfestigkeit $F_{max}$ von mehr als 2,1 mm/s*cN aufweist, und zwar gemäß dem Rheotens-Test bei einer Extrusionstemperatur von 200°C gemessen.

15. Polymerzusammensetzung nach Anspruch 14, wobei das Verhältnis zwischen der Dehnbarkeit und der Schmelzfestigkeit mehr als 2,5 mm/s*cN beträgt.

16. Polymerzusammensetzung nach einem der vorstehenden Ansprüche, die eine Abzugskraft F von 60 cN oder weniger bei einer Geschwindigkeit v = 80 mm/s beim Rheotens-Test bei einer Extrusionstemperatur von 200°C aufweist.

17. Polymerzusammensetzung nach einem der vorstehenden Ansprüche, die eine Schmelzfließrate $MFR_{2,16\ kg/230°C}$ im Bereich von 0,2 bis 10 g/10 min aufweist.

18. Verfahren zum Herstellen der Polymerzusammensetzung nach einem der Ansprüche 1 bis 17, das die folgenden Schritte in irgendeiner Reihenfolge aufweist:

(i) Copolymerisieren von Propylen mit einem Olefincomonomer, so daß ein statistisches Polypropylencopolymer entsteht, und
(ii) Copolymerisieren von Propylen mit einem Olefincomonomer, so daß ein elastomeres Copolymer entsteht.

19. Verfahren nach Anspruch 18, wobei der Verfahrensschritte (i) und/oder der Verfahrensschritt (ii) in zumindest einem Reaktor mit geschlossenem Kreis und/oder zumindest einem Gasphasenreaktor durchgeführt werden.

20. Verfahren nach Anspruch 18 oder 19, wobei die Verfahrensschritte in der folgenden Reihenfolge durchgeführt werden: (i) $\rightarrow$ (ii).

21. Verfahren nach einem der Ansprüche 18 bis 20, wobei der erste Verfahrensschritt in einem Reaktor mit geschlossenem Kreis durchgeführt wird, gegebenenfalls gefolgt von einer weiteren Polymerisation in einem Gasphasenreaktor, und der zweite Verfahrensschritt und wahlfreie weitere Verfahrensschritte in getrennten Gasphasenreaktoren erfolgten.

22. Verfahren nach einem der Ansprüche 18 bis 21, das ferner einen Schritt (iii) für die Homopolymerisation von Propylen umfaßt.

23. Verfahren nach Anspruch 22, wobei die Verfahrensschritte entweder in der Reihenfolge (i) $\rightarrow$ (iii) $\rightarrow$ (ii) oder in der Reihenfolge (iii) $\rightarrow$ (i) $\rightarrow$ (ii) durchgeführt werden.

24. Verfahren nach einem der Ansprüche 18 bis 23, wobei die Aufteilung zwischen dem Verfahrensschritt (i), gegebenenfalls in Kombination mit dem Verfahrensschritt (iii), und dem Verfahrensschritt (ii) unabhängig von deren Reihenfolge 95:5 bis 70:30 beträgt.

**25.** Verfahren nach einem der Ansprüche 18 bis 24, das einen Ziegler-Natta-Katalysator verwendet, der einen Elektronendonor einschließt.

**26.** Verfahren nach Anspruch 25, wobei der Ziegler-Natta-Katalysator durch Polymerisieren einer Vinylverbindung der folgenden Formel in Gegenwart des Katalysators modifiziert wird

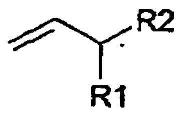

worin $R_1$ und $R_2$ zusammen einen 5- oder 6-gliedrigen gesättigten, ungesättigten oder aromatischen Ring bilden oder unabhängig voneinander für eine Alkylgruppe mit 1 bis 4 Kohlenstoffatomen stehen und der modifizierte Katalysator für die Herstellung der Polymerzusammensetzung verwendet wird.

**27.** Verfahren nach einem der Ansprüche 18 bis 26, wobei ein Keimbildner zugesetzt wird, der aus Talkum, polymerisierten Vinylverbindungen, Dibenzylidensorbitol, Natriumbenzoat, Di(alkyl-benzyliden)sorbitol oder Gemischen davon ausgewählt ist.

## Revendications

**1.** Composition de polymère comprenant :

(i) une matrice à base de polypropylène comprenant au moins un copolymère statistique de polypropylène, préparé par copolymérisation de propylène avec un comonomère oléfinique, dans laquelle la quantité des motifs de comonomère oléfinique dans la matrice est de 0,2 % en poids à 5 % en poids, par rapport au poids de la matrice à base de polypropylène, et
(ii) un copolymère élastomère de propylène et d'au moins un comonomère oléfinique,

la composition de polymère ayant un module de conservation G' à un module de perte G" = 5 kPa de G' (G" = 5 kPa) ≤ 3100 Pa, mesuré à 220 °C et un module de traction d'au moins 1350 MPa, mesuré selon la norme ISO 527-2/1B à 1 mm/minute et 23 °C.

**2.** Composition de polymère selon la revendication 1, dans laquelle le comonomère oléfinique du copolymère statistique de polypropylène est choisi parmi l'éthylène, les alpha-oléfines en $C_4$-$C_{10}$, ou des mélanges de ceux-ci.

**3.** Composition de polymère selon la revendication 2, dans laquelle le comonomère oléfinique est l'éthylène.

**4.** Composition de polymère selon la revendication 3, dans laquelle les motifs de comonomère d'éthylène dans le copolymère statistique de polypropylène sont présents en une quantité de 0,2 % en poids à 4 % en poids, par rapport à la quantité de la matrice à base de polypropylène.

**5.** Composition de polymère selon l'une quelconque des revendications précédentes, dans laquelle la matrice à base de polypropylène est unimodale.

**6.** Composition de polymère selon l'une quelconque des revendications 1 à 4, dans laquelle la matrice à base de polypropylène comprend en outre un homopolymère de polypropylène.

**7.** Composition de polymère selon la revendication 6, dans laquelle l'homopolymère de polypropylène a une vitesse de fluage $MFR_{2,16\ kg/230\ °C}$ inférieure à 20 g/10 minutes.

**8.** Composition de polymère selon la revendication 6 ou 7, dans laquelle la matrice à base de polypropylène est multimodale.

**9.** Composition de polymère selon la revendication 8, dans laquelle le poids moléculaire moyen en poids du copolymère statistique de polypropylène est supérieur au poids moléculaire moyen en poids de l'homopolymère de polypropylène.

**10.** Composition de polymère selon l'une quelconque des revendications précédentes, dans laquelle le comonomère oléfinique du copolymère élastomère est choisi parmi l'éthylène, les alpha-oléfines en $C_4$-$C_{10}$, ou des mélanges de ceux-ci.

**11.** Composition de polymère selon la revendication 10, dans laquelle le comonomère oléfinique est l'éthylène et le copolymère élastomère comprend une quantité de 10 à 70 % en poids de motifs de comonomère d'éthylène.

**12.** Composition de polymère selon l'une quelconque des revendications précédentes, comprenant le copolymère élastomère en une quantité de 5 % en poids à 30 % en poids.

**13.** Composition de polymère selon l'une quelconque des revendications précédentes, dans laquelle G' (G" = 5 kPa) $\leq$ 2900 Pa.

**14.** Composition de polymère selon l'une quelconque des revendications précédentes, ayant un rapport d'aptitude à l'étirage $v_{max}$ à la résistance à la fusion $F_{max}$ de plus de 2,1 mm/s*cN, mesuré selon le test de Rheotens à une température d'extrusion de 200 °C.

**15.** Composition de polymère selon la revendication 14, dans laquelle le rapport d'aptitude à l'étirage à la résistance à la fusion est supérieur à 2,5 mm/s*cN.

**16.** Composition de polymère selon l'une quelconque des revendications précédentes, ayant une force de tirage F inférieure ou égale à 60 cN à une vitesse v = 80 mm/s dans le test de Rheotens à une température d'extrusion de 200 °C.

**17.** Composition de polymère selon l'une quelconque des revendications précédentes, ayant une vitesse de fluage $MFR_{2,16\ kg/230\ °C}$ comprise dans la plage allant de 0,2 à 10 g/10 minutes.

**18.** Procédé de préparation d'une composition de polymère selon l'une quelconque des revendications 1 à 17, comprenant les étapes suivantes, dans n'importe quel ordre :

(i) copolymérisation du propylène avec un comonomère oléfinique pour donner un copolymère statistique de polypropylène, et
(ii) copolymérisation du propylène avec un comonomère oléfinique pour donner un copolymère élastomère.

**19.** Procédé selon la revendication 18, dans lequel l'étape (i) du procédé et/ou l'étape (ii) du procédé sont réalisées dans au moins un réacteur en boucle et/ou au moins un réacteur en phase gazeuse.

**20.** Procédé selon la revendication 18 ou 19, dans lequel les étapes du procédé sont réalisées dans l'ordre suivant : (i) $\rightarrow$ (ii).

**21.** Procédé selon l'une quelconque des revendications 18 à 20, dans lequel la première étape du procédé est réalisée dans un réacteur en boucle, facultativement suivie par une autre polymérisation dans un réacteur en phase gazeuse, et la deuxième étape du procédé et facultativement d'autres étapes du procédé sont réalisées dans des réacteurs en phase gazeuse séparés.

**22.** Procédé selon l'une quelconque des revendications 18 à 21, comprenant en outre une étape (iii) pour l'homopolymérisation du propylène.

**23.** Procédé selon la revendication 22, dans lequel les étapes du procédé sont réalisées dans l'ordre (i) $\rightarrow$ (iii) $\rightarrow$ (ii) ou l'ordre (iii) $\rightarrow$ (i) $\rightarrow$ (ii).

**24.** Procédé selon l'une quelconque des revendications 18 à 23, dans lequel l'écart entre l'étape (i) du procédé, facultativement en combinaison avec l'étape (iii) du procédé, et l'étape (ii) du procédé, quelque soit leur ordre, est de 95 : 5 à 70 : 30.

**25.** Procédé selon l'une quelconque des revendications 18 à 24, utilisant un catalyseur de Ziegler-Natta comprenant un donneur d'électron.

**26.** Procédé selon la revendication 25, dans lequel le catalyseur de Ziegler-Natta est modifié par polymérisation en présence du catalyseur d'un composé vinylique de formule :

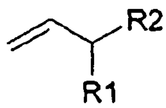

dans laquelle R1 et R2 forment ensemble un cycle saturé, insaturé ou aromatique de 5 ou 6 éléments ou représentent indépendamment un groupe alkyle comprenant de 1 à 4 atomes de carbone, et le catalyseur modifié est utilisé pour la préparation de la composition de polymère.

**27.** Procédé selon l'une quelconque des revendications 18 à 26, dans lequel un agent de nucléation est ajouté et est choisi parmi le talc, les composés vinyliques polymérisés, le dibenzylidène sorbitol, le benzoate de sodium, le di (alkylbenzylidène)sorbitol, ou des mélanges de ceux-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1301343 A
- WO 9924479 A
- WO 9924501 A
- EP 591224 A
- EP 1028985 A


### Non-patent literature cited in the description


- Encyclopedia of Polymer Science and Engineering. vol. 6, 545-558